# EUROPEAN PATENT SPECIFICATION

(11) **EP 0 850 439 B1**
(45) Date of publication and mention of the grant of the patent: **08.08.2001**
(21) Application number: 96930025.0
(22) Date of filing: 12.09.1996
(51) Int. Cl.: G05D 23/00, G05D 23/12

(54) **ADJUSTMENT DEVICE FOR A RADIATOR THERMOSTAT**
EINSTELLVORRICHTUNG FÜR EINEN HEIZKÖRPERTHERMOSTAT
DISPOSITIF DE REGLAGE POUR THERMOSTAT DE RADIATEUR

(30) Priority: 15.09.1995 DE 19534185
(43) Date of publication of application: 01.07.1998
(73) Proprietor: Danfoss A/S, 6430 Nordborg (DK)
(72) Inventor: FREDERIKSEN, Bjarne, DK-8600 Silkeborg (DK); PERSON, Stig, Gr n, DK-8462 Harlev J. (DK); NISSEN, Morten, Paasch, DK-8240 Risskov (DK); ANDERSEN, Erik, Haarbo, DK-8900 Randers (DK); MARKVART, Arne, DK-8600 Silkeborg (DK)
(86) International application number: DK9600380
(87) International publication number: WO9710535

(56) References cited:
- DE-A- 2 628 307
- GB-A- 2 052 739
- US-A- 1 517 204
- US-A- 1 847 911
- US-A- 3 664 193
- US-A- 5 413 277

## Description

The invention relates to an adjustment device for a radiator thermostat, having a housing closed at its exterior, in which a temperature sensor is arranged, and having a rotary knob. Such adjustment devices are either arranged directly on radiators, in which case the temperature sensor influences the radiator valve directly, or they are used as remote adjustment devices in which the adjustment device is connected, for example, by way of a capillary tube to a control device which in turn controls the radiator valve. The temperature sensor can comprise, for example, a pressure chamber which is filled with a fluid expanding in response to heat. The fluid displaced from the temperature sensor when the temperature rises then actuates the associated radiator valve.

For satisfactory regulation it is necessary for the temperature sensor to detect the temperature of the room, which it is to keep at a predetermined value. This is generally effected by detecting the temperature of the ambient air. In order to permit a rapid and direct detection of the ambient air temperature, the known adjustment devices have ventilation slots or openings through which the ambient air is able to pass. In many cases it is necessary in that case to mount the adjustment device in a predetermined orientation in order to achieve a specific flow-through behaviour of the ambient air. By virtue of convection, the air in the wall region or in the region of the radiator, where the adjustment devices will mainly be arranged, flows in most instances from bottom to top or from top to bottom.

A device of the kind mentioned in the introduction is known, for example, from EP 0 552 157 B1.

It has now been discovered that the control behaviour of a radiator thermostat equipped in this manner is not always satisfactory despite accurate installation instructions.

Further, DE 26 28 307 Al shows an adjustment device as mentioned in the introduction. Here a temperature sensor is arranged inside a rotary knob. On its front side the rotary knob has a metal plate, on which the temperature sensor bears. The rotary knob is closed to prevent an impurification of the inside of the adjustment device. The high heat conductivity of the metal plate ensures that the room temperature can reach the temperature sensor relatively fast. For the construction of the rotary knob different materials or at least different parts are used, which must be connected with each other. Such a connection often means an interference with the heat conductivity from the outside of the housing to the temperature sensor. It must be assumed that the metal plate has a heat expansion different from that of the knob, so that on a short or a long sight problems with the fixing will occur here.

The invention as defined by claim 1, is based on the problem of improving an adjustment device.

That problem is solved in an adjustment device of the kind mentioned in the introduction in that the housing is made of plastics material and forms a heat conduction path between the temperature sensor and the outside.

Most plastics materials have a certain thermal conductivity. Plastics materials are robust and easy to look after. The temperature sensor is in connection with the outside of the housing by way of housing parts. In this manner heat conduction from the outside to the inside can be ensured, to be precise by way of a defined heat conduction path, so that the thermal behaviour of the device is relatively accurately predictable. Although circulation of air through the housing is thus prevented, the temperature is able to act on the temperature sensor through the housing. In this manner, a clearly defined heat conducting path is achieved. Previously, in housings provided with openings, stationary volumes of air accumulated in an unpredictable manner. As is well known, air is a very poor conductor of heat. Many plastics materials achieve a thermal conductivity that is better by the factor 10. It is crucial, however, that the conditions are always clearly defined. Heat conduction through the housing is obviously sufficient to bring the temperature of the room to the temperature sensor. Because the housing is closed at its exterior, virtually no air is able to penetrate. Accordingly, dust and dirt particles are also kept away from the inside of the housing. Cleaning is considerably easier. Because dust and dirt remain outside the housing, no changes caused by dust or dirt depositions take place inside the housing. The adjustment device can be used both in the case of radiator thermostats which are mounted directly on the radiator, and in the case of remote adjustment devices in which the temperature sensor, if desired with a corresponding means to adjust the setpoint, is arranged remote from the radiator. When the adjustment device is arranged directly on the radiator, an opening must naturally be available in the housing through which a corresponding action on the radiator valve can be effected. In the installed state this is closed, however, by the radiator valve, so that even in that case a unit closed all round is obtained.

In an alternative or additional construction, the temperature sensor is separated at at least one point only by an air space from an outside wall of the housing. Rapid heat conduction from the ambient air to the temperature sensor is also observed as a result of that measure.

Despite the lack of a direct flow of air around the temperature sensor, it is possible to ensure that the temperature information in the ambient air reaches the temperature sensor as rapidly as possible.

It is especially advantageous for the temperature sensor to have a pressure chamber filled with a fluid under pressure, the volume of which chamber is adjustable from the outside. The change in volume causes the space available for the expandable fluid to change in such a way that when the temperature changes different pressures are also obtained in the pressure chamber in dependence on different requirements. These pressures, optionally together with the amount of the fluid displaced from the pressure chamber, can be used to control the actual radiator valve.

The housing preferably has a cover which is joined to a housing base by way of a snap-in locking connection. Additional fixing means, which are in most cases made of a different material, such as screws, for example, are not required. Only the material of the cover and the material of the housing base is used. Accordingly, the heat conduction path can be predetermined relatively accurately. No disruptive effects which might impair the heat conduction pass through the connection.

The same applies when the housing comprises a rotary knob which is in connection with an actuator by way of a snap-in locking connection. Heat conduction can be effected also through the rotary knob, and thus information about the temperature of the ambient air can be relayed to the temperature sensor.

Advantageously, together with a base plate, the cover and the rotary knob jointly form the outer boundaries of the housing. In this manner a relatively compact construction is provided, which on the one hand keeps dirt and dust out of the inside of the housing and on the other hand provides sufficient surfaces through which the temperature is able to get inside.

It is also preferred for the housing to be smooth at its exterior. It is thus easy to keep clean. Dirt and dust deposits, which would lead to greater insulation, can easily be avoided.

In an especially preferred construction, the adjustment device is in the form of a remote adjustment device which is connected by way of a lead to a radiator valve; on the side of the base plate remote from the temperature sensor there is arranged a flow channel which has an opening to the outside at each end, and on the side of the flow channel lying opposite the base plate there is arranged a mounting plate. When the adjustment device is in the form of a remote adjustment device, it is generally fixed to a wall by its mounting plate. Since the temperature influence on the temperature sensor is effected mainly by way of heat conduction through the housing itself, there is a risk that the wall temperature, which generally differs somewhat from the ambient temperature, will have an amplified influence on the temperature sensor. This is undesirable. Because a flow channel arranged between the base plate and the mounting plate is now provided, the effect of such a temperature influence by the wall is considerably reduced. Air flows through the flow channel, which has an opening to the outside at each end, for example as a result of convection. On the one hand the air flowing through subjects the base plate also to the temperature of the ambient air, and on the other hand equalizes the temperature of the mounting plate with the temperature of the ambient air, so that the effects of introducing a "false" temperature from the wall are largely eliminated. Despite exploiting heat conduction into the inside of the housing, it is therefore quite possible to attach the adjustment device directly to a wall of a different temperature.

In that case it is preferred for the mounting plate to have an opening which is connected to the flow channel. In this manner ambient air also passes directly onto the wall on which the device is mounted. Even if complete temperature equalization between the air in the flow channel and the wall will not take place, the wall temperature at that point will still be matched more closely to ambient temperature. Moreover, the opening in the mounting plate reduces the cross-section available for heat conduction.

The invention is described hereinafter with reference to a preferred embodiment in conjunction with the drawings, in which:
- Fig. 1: is a cross-section through an adjustment device and
- Fig. 2: is an elevational view of the adjustment device from below.

An adjustment device 1 with a housing base 2 has a mounting surface 3. The mounting surface 3 lies against a wall 4. The adjustment device 1 is fixed to this wall 4 by means of screws 5.

A cover 18 is joined to the housing base 2, to be precise by way of a snap-in locking connection 25, in which a projection 26 on the cover 18 has been pushed over a counter-element 27 on the housing base 2. The projection 26 then locks behind the counter-element 27. The cover 18 forms a part of the housing which is further formed by a rotary knob 17 which is arranged in a circular opening in the cover 18. On the side lying opposite the rotary knob 17 the housing is bounded by a base plate which is formed by a part of the housing base 2 and the base of a regulating element 13, which will be discussed later.

Arranged in the housing base 2 is a temperature sensor 6, which consists of a pressure chamber 7 enclosed on all sides which is completely filled with a fluid expanding in response to temperature. The pressure chamber 7 is connected to a capillary tube, not illustrated, through which fluid that is displaced from the pressure chamber 7 on expansion in response to temperature is passed to a control device for a radiator valve. On contraction of the fluid, fluid is correspondingly drawn back into the pressure chamber 7.

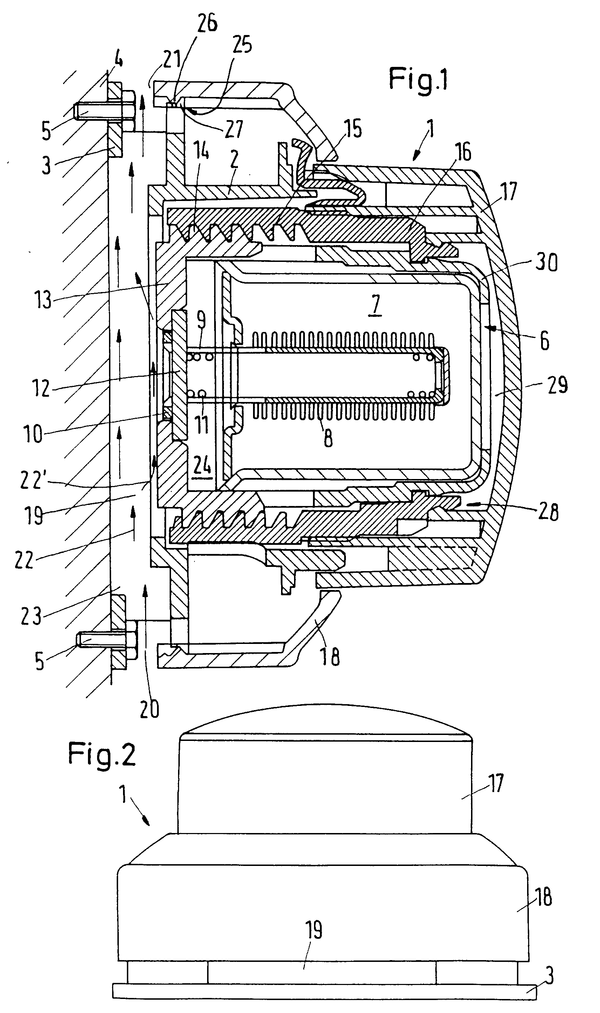

In the pressure chamber 7 there is a bellows 8 which acts on a plunger 9. The plunger 9 is in the form of a hollow cylinder and has a flanged-over rim 10 which is urged by a spring 11 onto that side of a pin 12 which is remote from the pressure chamber. The pin 12 is in turn movable jointly with the regulating element 13. The regulating element 13 is held so that it cannot rotate yet is axially displaceable in the housing base 2, for example, by means of a turning moment resisting element, not illustrated. On its circumferential surface the regulating element 13 has a thread 14 which engages with a corresponding counter-thread 15. The counter-thread 15 is arranged on an intermediate member 16 which can be turned by means of the rotary knob 17. The rotary knob 17 is joined to the intermediate member held in the housing base 2 by means of a snap-in locking connection 28. When the rotary knob 17 is turned, the regulating element 13 in Fig. 1 is therefore pushed further to the left or further to the right, with the result that the plunger 9 also moves further into the pressure chamber 7 or withdraws further from it, in other words, the volume of the pressure chamber 7 that is available for fluid changes.

The base plate, the rotary knob 17 and the housing cover 18 as well as the regulating element 13 are closed on all sides, disregarding inevitable gaps between the individual parts. These gaps are partly necessary to allow movement. But they are not large enough to allow a free exchange of air. Temperature influence on the temperature sensor 6 is then not effected directly by the ambient air, which is no longer able to flow around the temperature sensor. On the contrary, temperature influence is now effected exclusively by heat conduction through the housing parts, in particular the rotary knob 17, the intermediate member and the housing cover 18. This temperature conduction is sufficient to bring the temperature sensor 6 relatively quickly to the correct temperature, that is, the ambient temperature.

The temperature element is on the one hand in heat-conducting connection with the ambient air that surrounds the adjustment device 1 through housing parts, namely, the rotary knob 17 and the intermediate member 16, as well as a holder 30. Further, at a point between the temperature sensor 6 and the housing, which is here formed by the rotary knob 17, there is merely an air space 29. Even at this point there is a relatively quick temperature transition from the ambient air to the temperature sensor 6.

The plastics material of which the housing is made has a predetermined thermal conductivity, that is, the temperature of the ambient air is transferred relatively quickly to the temperature sensor 6. Since temperature changes in a room generally can and should not be effected suddenly, a certain delay can be tolerated in the speed with which a temperature change in the ambient air is imparted to the temperature sensor 6.

Between the mounting surface 3 and the base plate there is provided a flow channel 19 which is oriented substantially vertically, that is, runs from bottom to top. The flow channel 19 is in connection by way of a lower opening 20 and an upper opening 21 with the ambient air. Air is therefore able to flow, as indicated by arrows 22, through the flow channel 19, for example, by virtue of convection. Since the air is ambient air, that is, air which would otherwise surround the operating device 1, the temperature in the flow channel 19 is likewise the temperature of the ambient air.

The mounting surface 3 has an opening 23, so that the flow channel 19 is here bounded by the wall 4. On the opposite side, apart from the housing base 2 there is also the regulating element 13 which is movable transversely to the flow direction through the flow channel 19. In this manner the cross-section of the flow channel 19 can be changed. Moreover, the regulating element 13 is also exposed to the air flow through the flow channel 19.

A change in the cross-section of the flow channel 19 takes place where the regulating element 13 is arranged. This cross-sectional change is thus effected also in the region of the temperature sensor 6. A change in the flow, indicated by arrows 22', is enforced by this cross-sectional change. This ensures that air that flows through the flow channel will at any rate flow over the regulating element 13. A direct temperature influence on the regulating element 13 by the ambient air is therefore achieved. On the other hand, a larger transfer of heat from the wall 4 to the housing base 2 is prevented by the opening 23 in the mounting surface 3, because only a correspondingly smaller cross-sectional area is available. The housing parts which are warmed or cooled by conduction of heat from the wall 4 are brought by the ambient air flowing through the flow channel 19 relatively quickly to the ambient temperature again. Disruptive temperature influences from the wall 4 are largely excluded by virtue of the air flow through the flow channel 19.

Further, between the flow channel 19 and the temperature sensor there is additionally an air space 24 which is arranged between the regulating element 13 and the temperature sensor 6. This air space further improves the insulation between the wall 4 and the temperature sensor 6.

As is especially clear from Fig. 2, the outside of the adjustment device 1 is smooth, that is, it has no bores, slots or other openings through which ambient air could reach the temperature sensor element 6. Air can enter only through the flow channel 19. Even there it is held back from direct contact with the temperature sensor element 6. Dust or dirt particles cannot therefore be carried into the inside of the adjustment device 1. Nevertheless, the thermal conductivity of the housing ensures that the temperature that is detected by the temperature sensor 6 corresponds, with brief delays, to the ambient temperature.

The smooth exterior of the adjustment device 1 moreover has the advantage that it can be kept clean easily. It merely requires to be wiped. Dust or dirt particles are not able to collect so easily or can be very easily removed so that no change in the heat transfer behaviour occurs.

## Claims

1. Adjustment device for a radiator thermostat, having a housing closed at its exterior, in which a temperature sensor is arranged, and having a rotary knob forming part of said housing, characterized in that the housing is made of plastics material and forms a heat conducting path between the temperature sensor (6) and the outside.

2. Device according to claim 1, characterized in that the temperature sensor (6) is separated at at least one point only by an air space (29) from an outside wall of the housing.

3. Device according to one of claims 1 to 2, characterized in that the temperature sensor (6) has a pressure chamber (7) filled with a fluid under pressure, the volume of which chamber is adjustable from the outside.

4. Device according to one of claims 1 to 3, characterized in that the housing has a cover (18) which is joined to a housing base (2) by way of a snap-in locking connection (25).

5. Device according to one of claims 1 to 4, characterized in that the said rotary knob (17) is in connection with an actuator (16, 13) by way of a snap-in locking connection.

6. Device according to one of claims 1 to 5, characterized in that, together with a base plate (2, 13), the cover (18) and the rotary knob (17) jointly form the outer boundaries of the housing.

7. Device according to one of claims 1 to 6,
characterized in that the housing is smooth at its exterior.

8. Device according to one of claims 1 to 7, characterized in that it is in the form of a remote adjustment device which is connected by way of a lead to a radiator valve, wherein on the side of the base plate remote from the temperature sensor (6) there is arranged a flow channel (19) which has an opening (20, 21) to the outside at each end, and on the side of the flow channel (19) lying opposite the base plate there is arranged a mounting plate (3).

9. Device according to claim 8, characterized in that the mounting plate (3) has an opening (23) which is connected to the flow channel (19).

## Patentansprüche

1. Einstelleinrichtung für einen Heizkörper-Thermostaten mit einem Gehäuse das außen geschlossen ist, in dem ein Temperaturfühler angeordnet ist, und mit einem Drehgriff, der Teil des Gehäuses ist, dadurch gekennzeichnet, daß das Gehäuse aus Kunststoff gebildet ist und eine wärmeleitende Verbindung zwischen dem Temperaturfühler (6) und der Umwelt bildet.

2. Einrichtung nach Anspruch 1, dadurch gekennzeichnet, daß der Temperaturfühler (6) an mindestens einer Stelle nur durch einen Luftraum (29) von einer Außenwand des Gehäuses getrennt ist.

3. Einrichtung nach einem der Ansprüche 1 bis 2, dadurch gekennzeichnet, daß der Temperaturfühler (6) einen mit einer Druckflüssigkeit gefüllten Druckraum (7) aufweist, dessen Volumen von außen veränderbar ist.

4. Einrichtung nach einem der Ansprüche 1 bis 3, dadurch gekennzeichnet, daß das Gehäuse einen Deckel (18) aufweist, der mit einer Gehäuseasis (2) über eine Rastverbindung (25) verbunden ist.

5. Einrichtung nach einem der Ansprüche 1 bis 4, dadurch gekennzeichnet, daß der Drehgriff (17) über eine Rastverbindung mit einem Stellglied (16, 13) verbunden ist.

6. Einrichtung nach einem der Ansprüche 1 bis 5, dadurch gekennzeichnet, daß der Deckel (18) und der Drehgriff (17) gemeinsam mit einer Bodenplatte (2, 13) die äußeren Grenzen des Gehäuses bilden.

7. Einrichtung nach einem der Ansprüche 1 bis 6, dadurch gekennzeichnet, daß das Gehäuse außen glatt ist.

8. Einrichtung nach einem der Ansprüche 1 bis 7, dadurch gekennzeichnet, daß sie als Ferneinstelleinrichtung ausgebildet ist, die über eine Leitung mit einem Heizkörperventil verbunden ist, wobei auf der dem Temperaturfühler (6) abgewandten Seite der Bodenplatte ein Strömungskanal (19) angeordnet ist, der an jedem Ende jeweils eine Öffnung (20, 21) nach außen aufweist, und auf der der Bodenplatte gegenüberliegenden Seite des Strömungskanals (19) eine Montageplatte (3) angeordnet ist.

9. Einrichtung nach Anspruch 8, dadurch gekennzeichnet, daß die Montageplatte (3) eine Öffnung (23) aufweist, die mit dem Strömungskanal (19) verbunden ist.

## Revendications

1. Dispositif de réglage pour thermostat de radiateur, ayant un boîtier fermé extérieurement, dans lequel est disposé un détecteur de température, et ayant un bouton tournant faisant partie dudit boîtier, caractérisé en ce que le boîtier est en matière plastique et forme un trajet de conduction de chaleur entre le détecteur (6) de température et l'extérieur.

2. Dispositif selon la revendication 1, caractérisé en ce que le détecteur (6) de température n'est séparé d'une paroi extérieure du boîtier, en au moins un point, que par un espace vide.

3. Dispositif selon l'une quelconque des revendications 1 et 2, caractérisé en ce que le détecteur (6) de température a une chambre sous pression remplie de fluide sous pression, le volume de cette chambre étant réglable de l'extérieur.

4. Dispositif selon l'une quelconque des revendications 1 à 3, caractérisé en ce que le boîtier a un couvercle (18) relié à une base (2) du boîtier par un système de verrouillage à crans (25).

5. Dispositif selon l'une quelconque des revendications 1 à 4, caractérisé en ce que ledit bouton tournant (17) est relié à un actionneur (16, 13) par un système de verrouillage à crans.

6. Dispositif selon l'une quelconque des revendications 1 à 5, caractérisé en ce que, conjointement avec une plaque de base (2, 13), le couvercle (18) et le bouton tournant forment les limites extérieures du boîtier.

7. Dispositif selon l'une quelconque des revendications 1 à 6, caractérisé en ce que le boîtier est lisse extérieurement.

8. Dispositif selon l'une quelconque des revendications 1 à 7, caractérisé en ce qu'il se présente sous la forme d'un dispositif de réglage à distance relié par un fil conducteur à un robinet de radiateur, dans lequel, sur la face de la plaque de base distante de détecteur (6) de température est disposé un conduit d'écoulement (19) muni d'une ouverture (20, 21) débouchant à l'extérieur à chaque extrémité, et du côté du conduit d'écoulement (19) en regard de la plaque de base est disposée une plaque de montage (3).

9. Dispositif selon la revendication 8, caractérisé en ce que la plaque de montage (3) comporte une ouverture (23) reliée au conduit d'écoulement (19).
